Europäisches Patentamt

European Patent Office

Office européen des brevets

(11) Numéro de publication: **0 162 987**
**B1**

(12) **FASCICULE DE BREVET EUROPÉEN**

(45) Date de publication du fascicule du brevet:
**10.08.88**

(21) Numéro de dépôt: **84401072.8**

(22) Date de dépôt: **24.05.84**

(51) Int. Cl.⁴: **G 01 F  1/66,** G 01 P  5/00

(54) **Procédé et installation pour mesurer le debit d'un fluide par ultrasons.**

(43) Date de publication de la demande:
**04.12.85 Bulletin 85/49**

(45) Mention de la délivrance du brevet:
**10.08.88 Bulletin 88/32**

(84) Etats contractants désignés:
**CH DE GB IT LI NL**

(56) Documents cité:
**EP-A-0 017 475**
**EP-A-0 051 293**
**DE-A-1 959 140**
**DE-A-2 365 907**
**DE-A-2 437 107**
**GB-A-2 060 169**
**GB-A-2 061 510**
**US-A-3 918 304**
**US-A-3 974 693**

**PATENTS ABSTRACTS OF JAPAN, vol. 6, no. 18(P-100) 896 , 2 février 1982**
**MESURES REGULATION AUTOMATISME, vol. 43, no. 6/7, juin/juillet 1978, pages 55-65, Paris, FR; J.-C. DEMARAIS: "Débitmètre à ultrasons"**
**INSTRUMENTS & CONTROL SYSTEMS, vol. 41, no. 3, mars 1968, page 120, Cambridge Systems Inc., Radnor, GB; "Ultrasonic air speed indicator"**

(73) Titulaire: **Faes, Yves, 45, Quai Carnot, F-92210 Saint Cloud (FR)**

(72) Inventeur: **Faes, Yves, 45, Quai Carnot, F-92210 Saint Cloud (FR)**

LIBER, STOCKHOLM 1988

# 0 162 987

## Description

L'invention concerne, d'une part, un perfectionnement introduit dans le procédé de mesure d'une vitesse d'un fluide utilisant la propagation d'une onde accoustique à travers le fluide et le phénomène d'entraînement de l'onde par le mouvement du fluide dans deux directions opposées le long d'un chemin acoustique.

L'invention concerne d'autre part, une installation simple utilisant les propriétés particulières du procédé de mesure de la vitesse le long d'un trajet, pour déterminer le débit du fluide en écoulement axisymétrique ou non, à partir des mesures de la vitesse le long d'un certain nombre de trajets qui sont disposés de manière à réaliser un compromis entre le côut et la précision. Elle met en ceuvre notamment deux transducteurs ultrasoniques A et B, ci-après encore référencés 10 et 20, respectivement.

De façon générale, pour une installation à un seul chemin telle que celle reproduite à titre d'exemple à la figure (1), et pour un écoulement axisymétrique sans pulsations notoires ni turbulences, la vitesse moyenne $\bar{V}$ du fluide le long du trajet AB entre les deux transducteurs A et B est donnée par la formule (1) suivante:

$$\bar{V} = \frac{L^2}{2\sqrt{L^2 - D^2}} \cdot \frac{t_{BA} - t_{AB}}{t_{BA} \cdot t_{AB}} \qquad (1)$$

Dans cette réalisation, $t_{BA}$ est le temps de propagation de l'onde du transducteur B vers le transducteur A dans le sens inverse du courant, et $t_{AB}$ le temps de propagation du transducteur A vers B dans le sens du courant.

La plupart des procédés et appareils de mesure actuels qui déterminent la vitesse d'un fluide à partir de la formule (1), mettent en oeuvre cette relation de diverses manières:

a) une onde est déclenchée par A et se transmet vers B; ce dernier, lorsqu'il reçoit cette onde, déclenche à nouveau la propagation d'une onde de A vers B. L'opération se répète automatiquement et l'on obtient au niveau de A, une fréquence de répétition correspondant au temps de propagation des ondes de A vers B. De même, on obtient au niveau de B une fréquence de répétition correspondant au temps de parcours des ondes de B vers A. La différence entre ces fréquences est proportionnelle à $(t_{BA} - t_{AB})$ puisque la relation (1) peut s'écrire:

$$\bar{V} = \frac{L^2}{2\sqrt{L^2 - D^2}} \left( \frac{1}{t_{AB}} - \frac{1}{t_{BA}} \right) = \frac{L^2}{2\sqrt{L^2 - D^2}} (f_{AB} - f_{BA}) \qquad (2)$$

Les fréquences $f_{AB}$ et $f_{BA}$ sont obtenues dans ces procédés par des oscillateurs à fréquence variable qui fournissent un signal analogique image de la fréquence et dont la valeur mesurée est utilisée suivant la relation (2) pour déterminer la vitesse V du fluide.

b) les deux temps de propagation $t_{BA}$ et $t_{AB}$ ou l'un d'eux, sont mesurés par comptage à l'aide d'une horloge de quelques dizaines de MHZ, et la différence $(t_{BA} - t_{AB})$ est soit calculée, soit mesurée à l'aide d'un second moyen de comptage, soit mesurée à l'aide d'intégrateurs analogiques à courant constant qui fournissent des temps proportionnels aux retards.

Les documents suivants sont des exemples de l'art de la technique de mesure de la vitesse d'un fluide: brevet EP-A-0 051.293, brevet FR-A-2.454.101; revue Régulation Automatique 806 juin, juillet 1978 pages 55-65; ainsi que les documents GB-A-2 060 169 et EP-A-0 017 475 qui sont commentés plus loin.

L'emploi de composants analogiques pour la mesure de la différence des fréquences ou pour la mesure du retard différentiel $(t_{BA} - t_{AB})$, rend difficile la précision des mesures, en raison de la dérive de ces composants qui est principalement dûe à la température et à la durée d'exploitation.

D'autre part, la mesure de deux des trois grandeurs $t_{AB}$, $t_{BA}$, $t_{AB} - t_{BA}$, obtenue soit par l'emploi de deux moyens de comptage pour mesurer $t_{AB}$ et $(t_{AB} - t_{BA})$ ou l'emploi d'un moyen de comptage pour mesurer $t_{AB}$ et $t_{BA}$, interdit tout contrôle de cohérence entre les trois grandeurs $t_{AB}$, $t_{BA}$ et $(t_{AB} - t_{BA})$ et peut réduire la précision de la mesure ainsi que la stabilité du fonctionnement.

Enfin, dans les appareils actuels de mesure équipés de microprocesseur un convertisseur analogique numérique est nécessaire pour effectuer l'acquisition d'un signal analogique correspondant au retard différentiel $t_{BA} - t_{AB}$.

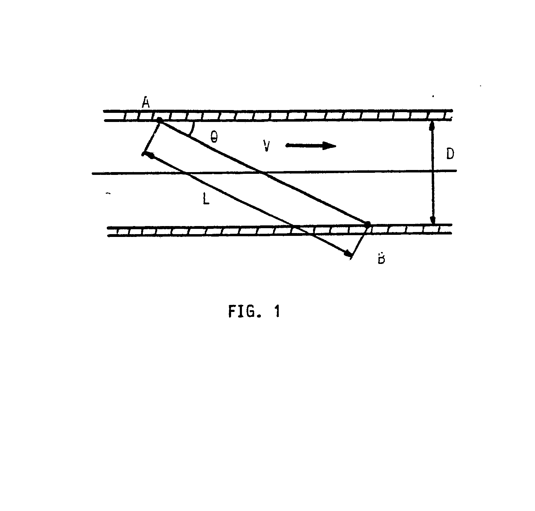

Dans le cas de l'eau par exemple, et pour une installation suivant la figure 1, les temps de parcours $t_{AB}$ et $t_{BA}$ peuvent être de l'ordre de plusieurs dizaines ou centaines de microsecondes en fonction de la longueur L du trajet AB et du diamètre D de la canalisation alors que le retard différentiel peut prendre des valeurs de l'ordre de 20 nanosecondes pour des vitesses faibles voisines de 10 cm/s. Une résolution effective de l'ordre de 1 à 2 nanosecondes peut être obtenue par l'emploi d'une fréquence d'horloge supérieure à 140 MHz qui donne une résolution de 7 nanosecondes sur un coup et une résolution effective de 1,5 nanoseconde sur plus de 20 coups.

Le dispositif de détermination de la vitesse moyenne V le long d'un trajet acoustique comporte selon la présente invention:

- un oscillateur fonctionnant à une fréquence supérieure à 140 MHz pour obtenir une mesure précise et un compteur.

2

- les moyens de contrôle et de compensation nécessaires pour éliminer les retards introduits par la propagation de l'onde dans les matériaux autres que le fluide ainsi que par les câbles et les circuits électroniques.

Un microcalculateur est utilisé dans ce dispositif pour:
- déclencher les différentes phases de mesure
- acquérir les trois grandeurs $t_{AB}$ $t_{BA}$ et $(t_{BA}-t_{AB})$
- calculer la vitesse le long du trajet qui est moyennée sur plusieurs mesures consécutives.

Le microcalculateur servira également à la seconde partie de l'invention pour la détermination du débit en écoulement général, axisymétrique ou non axisymétrique, à partir des mesures de la vitesse effectuées suivant différents trajets.

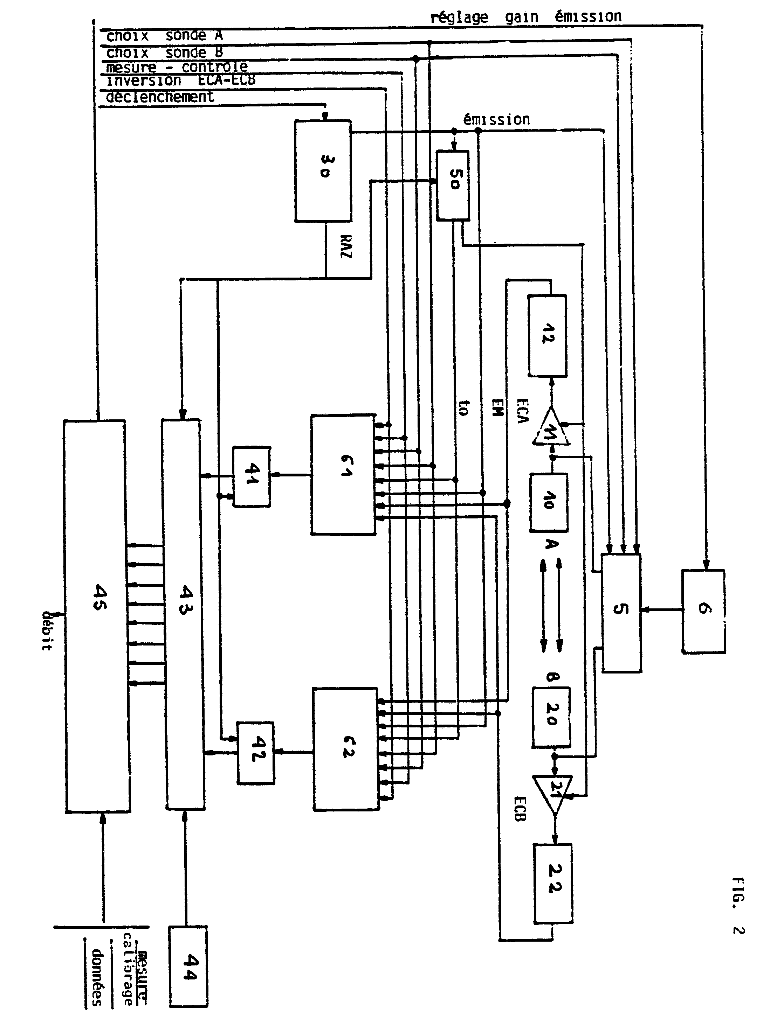

L'invention du dispositif de détermination de la vitesse $\bar{V}$ le long d'un trajet va être maintenant décrite en détail à l'aide de la figure 2 qui représente un schéma synoptique d'un mode de réalisation de l'invention.

Deux cycles d'opérations principaux sont déclenchés par le microcalculateur 45 selon l'état du signal logique émis par 45 vers les circuits de commutation 61 et 62 qui commandent respectivement les beaules dites flips flops 41 de démarrage et 42 d'arrêt du compteur 43:
- un cycle de mesure proprement dit des trois grandeurs de la formule (1)
- un cycle de contrôle du fonctionnement du dispositif et de compensation des différents retards parasites qui entachent d'erreur le retard différentiel.

Un cycle mesure est composé des 3 séquences suivantes qui sont déclenchées par le microcalculateur 45:
- séquence de mesure de la quantité $t_{AB} + \Delta t_{AB}$ ou $t_{AB}$ représente le temps de propagation et $\Delta t_{AB}$ la somme des retards parasites.
- séquence de mesure de la quantité $t_{BA} + \Delta t_{BA}$
- séquence de mesure de la quantité $t_{AB}-t_{BA} + \Delta (t_{AB}-t_{BA})$, ou $t_{BA}-t_{AB} + \Delta (t_{BA}-t_{AB})$ selon le sens de l'écoulement.

Dans ces séquences, un émetteur 5 est mis en oeuvre pour alimenter sélectivement ou simultanément les deux transducteurs 10 et 20. Pour avoir une indication de réception des impulsions acoustiques, des circuits de réception sont reliés aux transducteurs. Le récepteur 12 qui délivre le signal ECA est branché au transducteur 10 par l'intermédiaire de l'amplificateur 11; le récepteur 22 qui délivre le signal ECB est branché au transducteur 20 par l'intermédiaire de l'amplificateur 21.

Au cours de la séquence de mesure $t_{AB}$, le microcalculateur 45 commence par établir l'aiguillage de l'émetteur 5 vers le transducteur 10, l'aiguillage du signal de démarrage EM du compteur vers le circuit de commutation 61 commandant le flip flop "start" 41 du compteur 43, et l'aiguillage du récepteur 22 vers le circuit de commutation 62, commandant le flip flop "stop" 42 qui déclenchera l'arrêt du compteur. Puis 45 envoie le signal de déclenchement de la séquence de mesure au séquenceur 30; ce dernier commande successivement les opérations suivantes:
- remise à zéro des flips flops 41 et 42
- remise à zéro du compteur 43
- remise à zéro du circuit de verrouillage 50.

Le circuit de verrouillage 50 est utilisé d'une part pour inhiber l'effet de tout signal ECA, ECB pouvant être interprété à tort comme un signal d'écho reçu, pendant une période $t_0$ qui suit l'instant d'émission de l'onde, d'autre part le circuit de verrouillage 50 affaiblit le gain des amplificateurs 11 et 21 pendant une période $t_0 + \Delta$ qui suit l'instant d'émission, de manière à atténuer les signaux de sortie des amplificateurs lorsque leur circuit d'entrée est porté à un niveau de tension élevé par l'oscillation propre des transducteurs 10 et 20. Les signaux ECA et ECB ont leur effet sur les flip flops 41 et 42 inhibés par les circuits de commutation 61 et 62 pendant la durée $t_0$.

Après avoir commandé la remise à zéro des flips flops 41, 42 du compteur 43 et du circuit de verrouillage 50, le séquenceur 30 déclenche le circuit de verrouillage 50, l'émetteur 5, et émet le signal EM qui excite le flip flop "start" 41 par l'intermédiaire du circuit de commutation 61.

A partir de cet instant, les phénomènes se déroulent dans l'ordre suivant:
- à l'instant $t_0$ le circuit de verrouillage 50 lève l'inhibition de l'effet du signal ECB en laissant passer ce signal vers le flip flop "stop" 42 à travers le circuit de commutation 62.
- à l'instant $t_0 + \Delta$, le circuit de verrouillage 50 accroît le gain de l'amplificateur 21.
- à l'instant $(t_{AB} + t^1_{AB0} + t_{AB0} + t^2_{AB0} + t^3_{AB0} - t^4_{AB0})$, le compteur 43 est arrêté par le signal ECB.

En effet, au temps de propagation $t_{AB}$ s'ajoutent dans la grandeur mesurée, les termes parasites $t^1_{AB0}$ $t_{AB0} t^2_{AB0} t^3_{AB0}$ qui représentent respectivement le retard de propagation entre l'émetteur 5 et le transducteur 10, le retard dans les parties non fluides du trajet (fenêtre métallique du transducteur), le retard entre le transducteur 20 et le circuit de commutation 62, et celui entre 62 et le compteur 43; le retard de propagation $t^4_{AB0}$ entre le circuit de commutation 61 et le démarrage du compteur 43 doit évidemment être retranché de la somme précédente pour obtenir le temps effectif de comptage.

Après avoir fait l'acquisition du contenu du compteur 43, le microcalculateur 45 déclenche la séquence de mesure du temps de propagation $t_{BA}$ qui se déroule de façon identique, à l'exception toutefois des aiguillages préliminaires qui dans ce cas sont établis de l'émetteur 5 vers le transducteur 20, du signal de démarrage EM du compteur vers le cirquit de commutation 61 et du récepteur 12 vers le circuit de commutation 62 commandant l'arrêt du compteur.

Cette séquence conduit à la mesure de la quantité $(t_{BA} + t^1_{BA0} + t_{BA0} + t^2_{BA0} + t^3_{BA0} - t^4_{BA0})$ puisque au

## 0 162 987

temps de propagation cherché $t_{BA}$ s'ajoutent les retards $t^1_{BA0}$ entre l'émetteur 5 et le transducteur 20, $t_{BA0}$ dans les parties non fluides du trajet, $t^2_{BA0}$ entre le transducteur 10 récepteur et le circuit de commutation 62 et $t^3_{BA0}$ entre le circuit de commutation 62 et le compteur 43; le retard $t^4_{BA0}$ entre le circuit de commutation 61 et le compteur 43 introduit dans la chaîne de démarrage du comptage doit évidemment être retranché de la somme précédente pour la mesure du temps de propagation.

La troisième séquence prévue pour la mesure du retard différentiel est arrangée différemment puisque le dispositif détermine le sens de l'écoulement. A cet effet, le microcalculateur commence par aiguiller le signal ECA provenant du récepteur 12 vers le flip flop 41 pour le démarrage du compteur, et le signal ECB provenant du récepteur 22 vers le flip flop 42 pour l'arrêt du comptage ce qui permettra de mesurer dans ce cas le retard $t_{AB}$-$t_{BA}$. Le microcalculateur aiguille également l'émetteur 5 vers les deux transducteurs 10 et 20. Ensuite le microcalculateur 45 envoie le signal de déclenchement au séquenceur 50 qui commande les mêmes opérations que lors des séquences de mesure précédentes. A partir de l'instant de l'émission simultanée de l'onde par les transducteurs A et B, se produisent chronologiquement les événements suivants:

- à l'instant $t_0$, le circuit de verrouillage 50 lève l'inhibition des effets des signaux ECA et ECB sur les flips flops 41 et 42 par l'intermédiaire des circuits de commutation 61 et 62.
- à l'instant $t_0 + \Delta$, le circuit de verrouillage 50 accroît le gain des amplificateurs 11 et 21 de réception.
- si $t_{AB}$ est supérieur à $t_{BA}$, ECA commande par l'intermédiaire du circuit de commutation 61, l'excitation du flip flop 41 qui démarre le comptage, puis, normalement, ECB commande par l'intermédiaire du circuit de commutation 62, l'excitation du flip flop 42 qui arrête le comptage; dans ce cas, le contenu du compteur est normalement égal à la quantité:

$$t_{AB} - t_{BA} + (t^1_{AB0} + t_{AB0} + t^2_{AB0} + t^3_{AB0} - t^1_{BA0} - t_{BA0} - t^2_{BA0} - t^3_{BA0}$$

- si $t_{AB}$ est inférieur à $t_{AB}$, le contenu du compteur sera nul normalement et dans ce cas, le microcalculateur 45 relancera la séquence de mesure du retard différentiel $t_{BA} - t_{AB}$ en aiguillant les signaux ECB et ECA respectivement vers les flips flops 41 et 42.

Un cycle complet de mesures selon le procédé vient d'être décrit.

Le microcalculateur déclenchera une série de cycles de mesure identiques qui permettront de déterminer par moyennage la valeur des temps de propagation $t_{AB}$ $t_{BA}$ et du retard différentiel $t_{AB} - t_{BA}$ ou $t_{BA} - t_{AB}$ qui sera entâché des retards parasites indiqués ci-dessus.

Ces retards parasites qui peuvent être considérés comme constants pendant une certaine période, sont déterminés au cours du cycle de compensation qui est déclenché par le microcalculateur au terme de cette période; simultanément le cycle est arrangé pour contrôler le fonctionnement de l'ensemble du dispositif de mesure.

Dans une première phase du cycle, le microcalculateur 45 aiguille les signaux ECA et ECB respectivement vers le flip flop 41 "start" du compteur et vers le flip flop "stop" 42; le microcalculateur commute en même temps l'émetteur 5 vers les deux transducteurs 10 et 20 et réduit l'amplitude du signal d'excitation envoyé par l'émetteur 5 aux transducteurs 10 et 20 par l'intermédiaire du circuit de réglage 6.

· Le microcalculateur 45 lance le séquenceur 30 qui ordonne les opérations suivantes:
- remise à zéro des flips flops 41 et 42, du compteur 43 et du circuit de verrouillage 50.
- déclenchement de l'émetteur 5 qui envoie un signal impultionnel simultanément aux deux amplificateurs 11 et 21 dont le gain est affaibli par le circuit de verrouillage 50.
- mesure du temps de comptage égal à:

$$\Delta 1 = t^1_{AB0} + t^2_{AB0} + t^3_{AB0} - t^1_{BA0} - t^2_{BA0} - t^3_{BA0}$$

Dans la seconde phase du cycle de contrôle et de compensation, le microcalculateur aiguille les signaux ECB et ECA respectivement vers les flips flops 41 et 42 pour mesurer le temps de comptage égal à:

$$\Delta 2 = t^1_{BA0} + t^2_{BA0} + t^3_{BA0} - t^1_{AB0} - t^2_{AB0} - t^3_{AB0}$$

Trois cas peuvent se présenter au terme du cycle:
a) $\Delta 1 \neq 0$ et $\Delta 2 = 0$: dans ce cas, l'erreur de déclenchement du dispositif de mesure $\Delta 0$ est égale à $\Delta 1$, et le retard différentiel corrigé des erreurs est donné, selon le sens de l'écoulement, par la relation:

$$t_{AB} - t_{AB} = \Delta + \Delta 1$$
$$\text{ou} \quad t_{AB} - t_{BA} = \Delta - \Delta 1$$

b) $\Delta 1 = 0$ et $\Delta 2 \neq 0$: dans ce cas, $\Delta 0 = \Delta 2$, et le retard différentiel est égal à:
$$\Delta - \Delta 2 \text{ si } t_{BA} < t_{AB}$$
$$\Delta + \Delta 2 \text{ si } t_{BA} > t_{AB}$$

c) $\Delta 1 = \Delta 2 = 0$: dans ce cas, l'erreur de déclenchement $\Delta 0$ peut être considérée comme nulle au pouvoir de résolution éfféctif près du comptage réalisé sur plusieurs coups.

Le procédé de contrôle décrit ci-dessus fera apparaître un fonctionnement anormal si le contenu du compteur est différent de zéro au terme des deux phases du cycle défini ci-dessus.

4

L'intégration $\bar{V}$ de la vitesse du fluide le long du trajet AB corrigée des retards parasites qui sont introduits dans la mesure du retard différentiel est finalement donnée par la relation:

$$\bar{V} = \frac{L^2}{2\sqrt{L^2-D^2}} \cdot \frac{\Delta \pm \Delta 0}{t_{AB} \cdot t_{BA}}$$

Mais la vitesse V ne pourrait être égale à vitesse débitante qui permet de calculer le débit volumétrique du fluide, que dans l'hypothèse théorique d'un profil de vitesse parfaitement carré sur toute la section de la canalisation axisymétrique.

En réalité, dans un écoulement axisymétrique, la vitesse en un point de la section situé à une distance r de l'axe de la canalisation n'est pas constante; d'autre part, dans une installation, la tuyauterie comporte généralement une vanne, un ou plusieurs coudes, ou des noeuds de bifurcation qui provoquent des perturbations importantes de l'écoulement. De sorte que en écoulement axisymétrique ou non axisymétrique, des méthodes de correction doivent être appliquées pour déterminer avec précision le débit volumique du fluide dans la canalisation.

Les brevets suivants précédemment mentionnés sont des exemples de l'art de la technique permettant de calculer la vitesse moyenne du fluide dans une section d'une canalisation, à partir de la mesure de la vitesse du fluide le long d'un ou de plusieurs trajets acoustiques traversant le fluide en écoulement axisymétrique ou non axisymétrique: EP-A-0 017.475 et GB-A-2 060.169.

La présente invention vise également à mettre en oeuvre des méthodes de correction pour déterminer avec précision le débit du fluide, quel que soit le régime d'écoulement qui peut se produire selon les irrégularités de la tuyauterie:

- écoulement axisymétrique et établi
- écoulement non axisymétrique, parallèle à l'axe de la canalisation, ou comportant une composante dans le plan perpendiculaire à l'axe de la canalisation.

Dans un écoulement axisymétrique et établi représenté à la figure 3, le profil des vitesses dépend du nombre de REYNOLDS Re et de la rugosité des parois: la vitesse moyenne sur un trajet acoustique AB coupant l'axe de la canalisation est supérieure à la vitesse débitante et le rapport entre ces valeurs varie en fonction de Re.

Dans ce cas, le dispositif de correction selon l'invention comporte un seul trajet acoustique AB coupant l'axe de la canalisation et met en oeuvre une procédure de calcul qui, en rendant la mesure indépendante de Re, permet d'obtenir une précision meilleure que 1 % de l'étendue d'échelle dans une très large gamme de débits.

Selon cette procédure, on détermine la vitesse débitante à partir d'une forme mathématique du profil des vitesse, en égalisant la valeur calculée de la vitesse moyenne sur le trajet AB à la valeur mesurée; si le profil des vitesses est représenté par l'expression V (r) à une distance r de l'axe de la canalisation, cette égalité s'écrira:

$$\bar{V}_{AB} = \frac{1}{R} \cdot \int_0^R V(r).dr \qquad (3)$$

Or, la vitesse débitante est égale à:

$$\bar{V} = \frac{2}{R^2} \cdot \int_0^R r.V(r)dr = \frac{2}{R^2} \cdot [r. \int V(r).dr]_0^R - \frac{2}{R^2} \cdot \int_0^R [\int V(r)dr]dr \qquad (4)$$

La relation (3) permet de calculer $\bar{V}_{AB}$ à partir de V (r) et la relation (4) dans laquelle est introduite V (r) permet de calculer la vitesse débitante $\bar{V}$

Comme V (r) est une fonction supposée connue de Re, la procédure de calcul indiquée précédemment peut être utilisée par itération, d'abord pour la détermination approximative du nombre de REYNOLDS Re en fonction d'une valeur estimée ou d'une première évaluation grossière de la vitesse débitante, puis par le calcul de la vitesse débitante selon le procédé indiqué précédemment; la vitesse débitante est à nouveau calculée avec une valeur de Re révisée et plus précise correspondant à la vitesse débitante déterminée pendant la première itération. Ce procédé de calcul effectué par le microcalculateur de l'appareil de mesure converge rapidement vers une valeur très précise de la vitesse débitante.

Un exemple de forme mathématique du profil de vitesse, qui est généralement adoptée, est la loi exponentielle:

$$V(r) = k.\bar{V}.(1 - \tfrac{r}{R})^{1/n}$$

où n est un nombre dépendant du nombre de REYNOLDS Re et de la rugosité de la canalisation. Les valeurs de n sont données en fonction de Re par le tableau:

5

| Re | $4.10^3$ | $2,3.10^4$ | $1,1.10^5$ | $1,1.10^6$ | $3,2.10^6$ |
|---|---|---|---|---|---|
| n | 6 | 6,6 | 7 | 8,8 | 10 |
| $\frac{\bar{V}}{V_{AB}}$ | 0,923 | 0,9296 | 0,9333 | 0,9462 | 0.9524 |

L'intégration de la relation (3) donne l'expression du coefficient k en fonction de Re:

$$k = \frac{(1 + 2n) \cdot (1 + n)}{2n^2}$$

et l'intégration de la relation (4) donne la valeur de la vitesse débitante

$$\bar{V} = \bar{V}_{AB} \cdot \frac{2n}{1+2n} \tag{5}$$

Les valeurs du rapport $\bar{V}/\bar{V}_{AB}$ en fonction de Re déduites de la relation (5) sont portées dans le tableau ci-dessus.

L'hypothèse d'un écoulement axisymétrique et établi n'est vraie que si la canalisation comporte des longueurs droites en amont et en aval de la section de mesure supérieures à des valeurs qui sont indiquées dans la norme ISO 5167 en fonction des irrégularités de la tuyauterie.

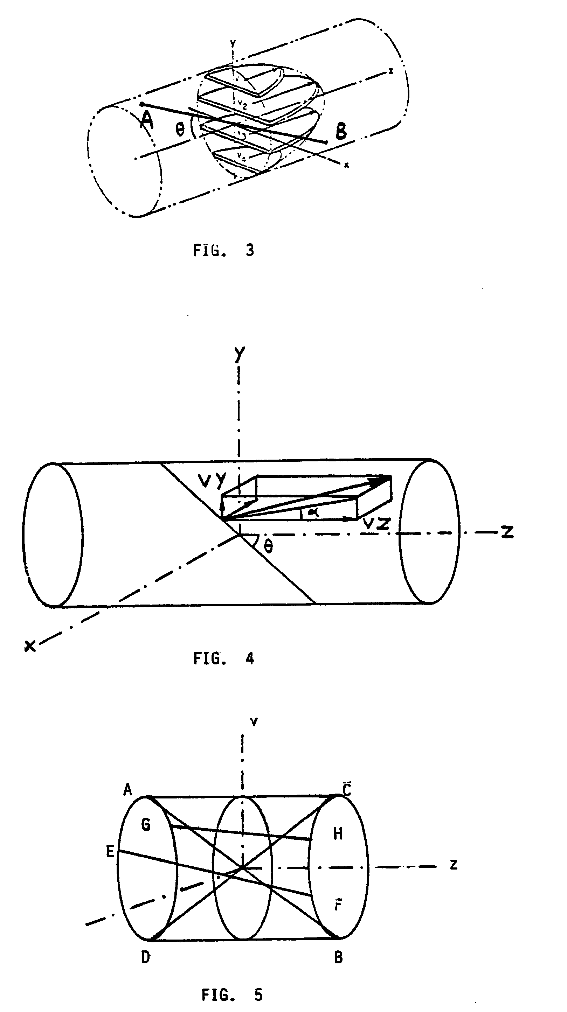

Dans le cas général, le vecteur vitesse en un point (x, y) du plan de référence xoy représenté à la figure 4, a une composante débitante $V_z$ parallèle à oz qui est fonction des coordonnées x et y de ce point, et une composante giratoire dans le plan xoy: dans ce cas, la mesure précise du débit nécessite l'utilisation de plusieurs trajets acoustiques.

Le dispositif selon l'invention consiste à calculer la vitesse débitante $\bar{V}$ dans la section xoy en tenant compte de la distribution réelle non symétrique de $V_z$ (x,y) et en corrigeant l'effet de la giration sur la mesure de la valeur moyenne de la vitesse le long des trajets acoustiques. Selon l'invention, une disposition avantageuse de l'appareil de mesure comprend 4 trajets acoustiques comme indiqué à la figure 5 permettant de réaliser un compromis entre le coût et la précision:

- 2 trajets AB et CD sont installés dans le plan yoz symétriquement par rapport à l'axe oz de la canalisation.
- 1 trajet EF est installé dans un plan parallèle à yoz et d'abscisse $x_0$.
- 1 trajet GH est installé dans un plan parallèle à xoz et d'ordonnée $y_0$.

Il est évident que l'intégration de la vitesse de propagation de l'onde acoustique le long du trajet AB n'est pas influencée par la composante $V_x$ du vecteur vitesse et ne dépend que des composantes $V_y$ et $V_z$. Si l'on admet que l'angle $\theta$ représenté à la figure 4 reste constant dans l'intégration du vecteur vitesse le long de AB, les temps de propagation sont égaux à:

$$t_{BA} = \frac{l}{C - V_z \cdot \cos\theta + V_y \cdot \sin\theta}$$

$$t_{AB} = \frac{l}{C + V_z \cdot \cos\theta - V_y \cdot \sin\theta}$$

et le retard différentiel est égal à:

$$t_{BA} - t_{AB} = \frac{2}{L.t_{BA}.t_{AB}} \cdot V_z \cdot \frac{\cos(\theta + \alpha)}{\cos\alpha} \tag{6}$$

De même le retard différentiel le long de CD est égal à:

$$t_{CD} - t_{DC} = \frac{2}{L.t_{CD}.t_{DC}} \cdot V_z \cdot \frac{\cos(\theta - \alpha)}{\cos\alpha} \tag{7}$$

En ajoutant les expression (6) et (7), on obtient l'expression de la valeur moyenne de la composante débitante de la vitesse dans le plan yoz d'absisse x = o:

$$\bar{V}_z \,(x=0) = \frac{L^2}{4\sqrt{L^2 - D^2}} \cdot \frac{[t_{BA} - t_{AB}] + [t_{CD} - t_{DC}]}{\left\{\dfrac{t_{AB} + t_{BA} + t_{CD} + t_{DC}}{4}\right\}^2}$$

Selon l'invention les temps de propagation $t_{AB}$ $t_{BA}$ $t_{CD}$ $t_{DC}$ et les retards différentiels $[t_{BA} - t_{AB}]$ et $[t_{CD} - t_{DC}]$ sont mesurés par le procédé entièrement numérique décrit ci-dessus dans la première partie de la présente invention.

La valeur moyenne de la composante débitante de la vitesse le long du trajet EF situé dans le plan parallèle à yoz d'abscisse $x_0$ est donné par la relation suivante, si EF et parallèle à AB:

$$\bar{V}_z (x = x_0) \cdot \frac{Cos[\theta + \alpha(x_0)]}{Cos\alpha(x_0)} = \frac{L_{EF}}{2} \cdot \frac{t_{FE} - t_{EF}}{t_{FE} \cdot t_{EF}}$$

dans laquelle $\alpha(x_0)$ est défini comme précédemment, à partir de la valeur moyenne des composantes $\bar{V}_y$ et $\bar{V}_z$, par la relation:

$$tg\alpha(x_0) = \frac{\bar{V}_y (x = x_0)}{\bar{V}_z (x = x_0)}$$

L'utilisation d'un second trajet installé dans le plan parallèle à yoz d'abscisse $x_0$, symétriquement à EF, permettrait de calculer avec plus d'exactitude la composante débitante $\bar{V}_z (x = x_0)$, en appliquant le processus de calcul qui a été employé pour les trajets AB et CD. Mais l'amélioration incrémentale de la précision sur la mesure du débit effectué par le processus d'intégration décrit ci-après, est faible et ne justifie pas le coot d'une paire de transducteurs supplémentaires.

La composante débitante $\bar{V}_z (x = x_0)$ est donc prise égale à la valeur approchée:

$$\bar{V}_z (x = x_0) = \frac{L^2_{EF}}{2\sqrt{L^2 - R^2}} \cdot \frac{t_{FE} - t_{EF}}{t_{FE} \cdot t_{EF}}$$

De même la valeur moyenne de la composante débitante $\bar{V}_z (y = y_0)$ le long du trajet GH dans le plan parallèle à xoz d'ordonnée $y = y_0$, peut être prise égale à:

$$\bar{V}_z (y = y_0) = \frac{L^2_{GH}}{2\sqrt{L^2 - R^2}} \cdot \frac{t_{HG} - t_{GH}}{t_{HG} \cdot t_{GH}}$$

Selon l'invention, le processus d'intégration de la vitesse débitante dans le plan xoy à mettre en oeuvre pour calculer le débit:

$$\iint_{xoy} V_z (x,y) \, dx. \, dy$$

, consiste à représenter la distribution dissymétrique de la composante débitante $V_z$, par la forme mathématique:

$$V_z (x,y) = k + ax + by - \frac{k}{R^2} \cdot (x^2 + y^2) - \frac{axy^2}{R^2} - \frac{bx^2y}{R^2} - \frac{ax^3}{R^2} - \frac{by^3}{R^2}$$

qui s'annule sur les parois de la section circulaire, et, à effectuer le calcul du débit en deux étapes:
- les 3 paramètres inconnus introduits dans la fonction $V_z (x,y)$ sont déterminés en résolvant le système des 3 équations simultanées:

$$\bar{V}_z (x = 0) = \frac{1}{2R} \cdot \int_{-R}^{+R} V_z (o,y) \, dy = \frac{2k}{3}$$

$$\bar{V}_z (x = x_0) = \frac{1}{2\sqrt{R^2 - x_0^2}} \cdot \int_{-\sqrt{R^2 - x_0^2}}^{+\sqrt{R^2 - x_0^2}} V_z (x_0, y) \, dy = \frac{2k}{3} + \frac{2ax_0}{3} - \frac{2kx_0^2}{3 R^2} - \frac{2ax_0^3}{3R^2}$$

$$\bar{V}_z (y = y_0) = \frac{1}{2\sqrt{R^2 - y_0^2}} \cdot \int_{-\sqrt{R^2 - y_0^2}}^{\sqrt{R^2 - y_0^2}} V_z (x, y_0) \, dy = \frac{2k}{3} + \frac{2by_0}{3} - \frac{2ky_0^2}{3 R^2} - \frac{2by_0^3}{3 R^2}$$

qui sont obtenues en égalisant les valeurs mesurées de la vitesse débitante moyenne comme indiqué ci-dessus, aux valeurs calculées par intégration.
- en seconde étape, le débit est calculé par l'intégration double étendue à la section circulaire de la canalisation, de la vitesse débitante déterminée à la première étape.

Les trajets acoustiques EF et GH peuvent être positionnés par exemple aux valeurs que définit la méthode d'intégration numérique de GAUSS appliquée à un écoulement axisymétrique avec un profil exponentiel des

vitesses, soit:

$$x_o = y_o = 0,57. R$$

Il est clair que la procédure de calcul employée pour la détermination du débit, est mise en oeuvre par le microcalculateur 45 servant également à la détermination de la vitesse du fluide le long d'un trajet acoustique.

On a ainsi décrit un procédé de mesure de la vitesse moyenne d'un fluide sur un trajet acoustique, et une installation simple pour mesurer le débit volumique en écoulement axisymétrique ou non axisymétrique. Cet appareil utilise plusieurs trajets qui sont placés de manière à réaliser un compromis entre le coût et la précision.

**Revendications**

1. Procédé de mesure par ultrasons de la vitesse d'un courant de fluide dans une conduite circulaire suivant la formule:

$$\bar{V} = \frac{L}{2.Cos\,\theta} \cdot \frac{t_{AB}-t_{BA}}{t_{AB}.t_{BA}}$$

où L est la longueur du trajet AB et $\theta$ l'inclinaison du trajet AB par rapport à l'axe de la conduite, ce procédé mettant en oeuvre:

-la mesure $t_{AB}$ du temps de propagation d'une onde d'un transducteur A vers un transducteur B par comptage des impulsions fournies par une horloge, le trajet AB étant la distance entre A et B,

-la mesure $t_{BA}$ du temps de propagation d'une onde en sens inverse par comptage desdites impulsions,

-la mesure du retard différentiel $t_{AB}-t_{BA}$ ou $t_{BA}-t_{AB}$ selon le sens de l'écoulement, par comptage desdites impulsions,

-un compteur unique, muni de portes de démarrage et d'arrêt, pour mesurer les trois temps précités,

-une phase de compensation des retards parasites qui entachent d'une erreur la mesure du retard différentiel, comportant d'une part, la mesure du retard parasite $\Delta1$ au cours de laquelle les portes de démarrage et d'arrêt du compteur sont commandées respectivement par le signal d'echo ECA reçu par le transducteur A et par le signal d'écho ECB reçu par le transducteur B, les dits signaux ECA et ECB provenant de l'émission simultanée des deux transducteurs, et, d'autre part, la mesure du retard parasite $\Delta2$ au cours de laquelle les portes de démarrage et d'arrêt du compteur sont commandées respectivement par les signaux d'écho ECB et ECA et permettant de corriger le retard différentiel dont la valeur est prise égale à:

$$(t_{AB}-t_{BA}) \pm \Delta1 \text{ si } \Delta1 \neq 0 \text{ et } \Delta2 = 0$$

$$\text{ou } (t_{AB}-t_{BA}) \pm \Delta2 \text{ si } \Delta1 = 0 \text{ et } \Delta2 \neq 0$$

$$\text{ou } (t_{AB}-t_{BA}) \text{ si } \Delta1 = \Delta2 = 0$$

-une phase de controle, au cours de laquelle l'on compare la différence entre les deux valeurs mesurées $t_{AB}$ et $t_{BA}$ à la valeur mesurée et corrigée du retard différentiel.

2. Procédé de mesure selon la revendication 1, consistant en outre à déterminer une valeur approchée de la vitesse débitante selon le procédé de la revendication 1, à déterminer une première valeur du nombre de REYNOLDS à partir de cette valeur de la vitesse, à déterminer le profil des vitesses à partir du nombre de REYNOLDS ainsi déterminé, à intégrer cette valeur du profil des vitesses sur la section de la conduite pour obtenir une deuxième valeur de la vitesse débitante et à déterminer une valeur plus approchée du nombre de REYNOLDS et à renouveler ainsi la détermination de la vitesse débitante jusqu'à obtenir une valeur de cette dernière égale à la précédente.

3. Procédé de mesure selon la revendication 1, selon lequel:

- une première et une deuxième paires de transducteurs sont disposées dans un plan yoz passant par l'axe oz de la canalisation symétriquement par rapport à l'axe oy perpendiculaire à oz, la troisième paire est parallèle au plan yoz et la quatrième paire est située dans un plan parallèle au plan xoz; ox, oy, oz formant un système d'axes de coordonnées rectangulaires,

- la vitesse débitante au centre de là conduite est déduite des mesures de la vitesse moyenne le long des deux trajets définis ci-dessus par les première et deuxième paires de transducteurs,

- le profil des vitesses choisi pour représenter la composante $V_z$ de la vitesse débitante est de la forme:

$$V_z (x,y) = k + ax + by - \frac{k}{R^2}(x^2 + y^2) - \frac{a x y^2}{R^2}$$

$$- \frac{b x^2 y}{R^2} - \frac{a x^3}{R^2} - \frac{b y^3}{R^2},$$

a, b et k étant des coefficients numériques et R le rayon de la conduite.

4. Dispositif de mesure par ultransons de la vitesse d'un courant de fluide dans une conduite circulaire

suivant la formule

$$\bar{V} = \frac{L}{2\cos\theta} \cdot \frac{t_{AB} - t_{BA}}{t_{BA} \cdot t_{AB}}$$

où L est la longueur du trajet AB et $\theta$ l'inclinaison du trajet AB par rapport à l'axe de la conduite, pour la mise en oeuvre du procédé selon l'une quelconque des revendications 1 à 3, ledit dispositif comportant:

-au moins deux transducteurs ultrasoniques A, B, séparés par le trajet AB,

-des moyens, constitués par un compteur unique (43), pour effectuer les mesures successives, par comptage des impulsions fournies par une horloge de fréquence supérieure à 140 MHz, du temps $t_{AB}$ de propagation d'une onde émise par le transducteur A vers le transducteur B, du temps $t_{BA}$ de propagation d'une onde en sens inverse et du retard ou temps différentiel $t_{AB}$-$t_{BA}$ ou $t_{BA}$-$t_{AB}$ selon le sens de l'écoulement,

-des moyens de commutation (61, 62) commandant des portes d'arrêt (42) et de démarrage (41) permettant

- le démarrage du compteur (43) par le signal d'émission de l'onde du transductcur A vers le transducteur B et l'arrêt du compteur (43) par le signal d'écho ECB reçu par B, pour mesurer $t_{AB}$;

- le démarrage du compteur (43) par le signal d'émission de l'onde du transducteur B vers A et l'arrêt du compteur (43) par le signal d'écho ECA reçu par A, pour mesurer $t_{BA}$;

- après l'émission d'une onde simultanément par les deux transducteurs A. B le démarrage du compteur (43) par le signal d'écho ECA et son arrêt par le signal d'écho ECB, ou inversement selon le sens de l'écoulement, pour mesurer le retard différentiel correspondant $t_{AB}$ -$t_{BA}$, $t_{BA}$ -$t_{AB}$.

## Patentansprüche

1. Verfahren zur Messung der Strömungsgeschwindigkeit eines Fluids in einer Leitung mit kreisförmigem Querschnitt mittels Ultraschall nach der Formel

$$\bar{V} = \frac{L}{2\cos\theta} \cdot \frac{t_{AB} - t_{BA}}{t_{AB} \cdot t_{BA}}$$

wobei L die Länge der Strecke AB und $\theta$ die Neigung der Strecke AB bezüglich der Längsachse der Leitung ist, wobei in diesem Verfahren erfolgt:

- die Messung der Fortpflanzungszeit $t_{AB}$ einer Welle von einem Ultraschallwandler A bis zu einem Ultraschallwandler B durch Zählen der von einem Taktgeber gelieferten Impulse, wobei die Strecke AB der Abstand zwischen A und B ist, Messen der Fortpflanzungszeit $t_{BA}$ einer Welle in umgekehrter Richtung durch Zählen der Impulse,

- Messen der Verzögerungsdifferenz $t_{AB}$-$t_{BA}$ oder $t_{BA}$-$t_{AB}$, je nach Fließrichtung, durch Zählen der besagten Impulse, wobei diese drei vorgenannten Zeiten durch einen einzelnen mit Start- und Stopp-Gattern versehenen Zähler erfolgt, wobei eine Phase zur Kompensation parasitärer Verzögerungen vorgesehen ist, die von einem Meßfehler der Verzögerungsdifferenz herrühren und die einerseits aus der Messung der parasitären Verzögerung $\Delta 1$, während der die Start- und Stopp-Gatter des Zählers jeweils durch das Echosignal ECA gesteuert werden, das von dem Wandler A empfangen wird und durch das Echosignal ECB, das von dem Wandler B empfangen wird, wobei die Signale ECA und ECB von der gleichzeitigen Emission der beiden Wandler abstammen und andererseits aus der Messung der parasitären Verzögerung 2 besteht, während der die Start- und Stopp-Gatter des Zählers jeweils von den Echosignalen ECB und ECA gesteuert werden, wodurch ermöglicht wird, die Differenzverzögerung zu korrigieren, dessen Wert gleichgesetzt wird mit:

$(t_{AB}-t_{BA}) \pm \Delta 1$ wenn $\Delta 1 \neq 0$ und $\Delta 2 = 0$

oder $(t_{AB}-t_{BA}) \pm \Delta 2$ wenn $\Delta 1 = 0$ und $\Delta 2 \neq 0$

oder $(t_{AB}-t_{BA})$ wenn $\Delta 1 = \Delta 2 = 0$

und Vorsehen einer Kontrollphase, während der die Differenz zwischen den beiden gemessenen Werten $t_{AB}$ und $t_{BA}$ mit dem gemessenen und korrigierten Wert der Verzögerungsdifferenz verglichen wird.

2. Meßverfahren nach Anspruch 1, welches ferner darin besteht, einen an die Durchsatzgeschwindigkeit angenäherten Wert nach dem Verfahren gemäß Anspruch 1 zu bestimmen, einen ersten Wert der Reynolds Zahl ausgehend von diesem Geschwindigkeitswert zu bestimmen, das Geschwindigkeitsprofil ausgehend von der zu ermittelnden Reynolds Zahl zu bestimmen, diesen Wert des Geschwindigkeitsprofils über dem Querschnitt der Leitung zu integrieren, um einen zweiten Wert der Durchsatzgeschwindigkeit zu erhalten und einen besser genäherten Wert der Reynolds Zahl zu erhalten und somit die Bestimmung der Durchsatzgeschwindigkeit zu erneuern, solange, bis ein Wert der Durchsatzgeschwindigkeit bestimmt wird, der gleich dem vorhergehend bestimmten Wert ist.

3. Meßverfahren nach Anspruch 1, nach dem

- ein erstes und ein zweites Wandlerpaar in einer Ebene yoz angeordnet sind, wobei die Ebene durch die Achse oz des Leitungssystems symmetrisch bezüglich der Achse oy, die senkrecht auf der Achse oz steht, verläuft, wobei das dritte Paar parallel zur Ebene yoz angeordnet ist und das vierte Paar in einer Ebene, die parallel zu der Ebene xoz verläuft (wobei ox, oy, oz ein System rechtwinklig zueinander angeordneter Koordinatenachsen bilden),

- die Durchsatzgeschwindigkeit in der Mitte der Leitung abgeleitet wird aus den Messungen der mittleren Geschwindigkeit entlang der beiden oben definierten Strecken mittels der ersten und zweiten Wandlerpaare, und

- wobei das gewählte Geschwindigkeitsprofil zur Darstellung der $V_z$ Komponente der Durchsatzgeschwindigkeit die Form hat:

$$V_z(x,y) = k + ax + by - \frac{k}{R^2}(x^2+y^2) - \frac{axy^2}{R^2}$$

$$- \frac{bx^2y}{R^2} - \frac{ax^3}{R^2} - \frac{by^3}{R^2},$$

wobei a, b und k numerische Koeffizienten sind und R der Radius der Leitung.

4. Vorrichtung zur Messung der Geschwindigkeit einer Fluidströmung in einer Leitung mit kreisförmigem Querschnitt mittels Ultraschall nach der Formel

$$\bar{V} = \frac{L}{2\cos\theta} \cdot \frac{t_{AB}-t_{BA}}{t_{BA}.t_{AB}}$$

wobei L die Länge der Strecke AB und $\theta$ die Neigung der Strecke AB bezüglich der Achse der Leitung angibt, zur Durchführung des Verfahrens nach einem der Ansprüche 1 bis 3, mit

- mindestens zwei Ultraschallwandlern A, B, die durch die Strecke AB voneinander getrennt sind,
- Organen, bestehend aus einem einzelnen Zähler (43) zur Durchführung aufeinanderfolgender Messungen, mittels Zählen von Impulsen, die durch einen Taktgeber geliefert werden, der eine Frequenz aufweist, die größer als 140 MHz ist, der Zeit $t_{AB}$, der Fortpflanzung einer von dem Wandler A in Richtung auf den Wandler B emittierten Welle, der Fortpflanzungszeit $t_{BA}$, einer Welle in umgekehrter Richtung und der Zeitverzögerungsdifferenz $t_{AB}$-$t_{BA}$ oder $t_{BA}$-$t_{AB}$, je nach Durchflußrichtung,
- Kommutatoren (61, 62), die die Stopp- (42) und Start-(41) Gatter steuern, die das Starten des Zählers (43) durch das Emissionssignal der Welle des Wandlers A in Richtung auf den Wandler B und das Stoppen des Zählers (43) durch das durch B empfangene Echosignal ECB zu ermöglichen, um $t_{AB}$ zu messen, das Starten des Zählers (43) durch das Emissionssignal der Welle des Wandlers B in Richtung auf den Wandler A und das Stoppen des Zählers (43) durch das Echosignal ECA, das vom Wandler A empfangen wird, um die Zeit $t_{BA}$ zu messen und um nach der gleichzeitigen Emission einer Welle durch die beiden Wandler das Starten des Zählers (43) durch das Echosignal ECA und das Stoppen des Zählers durch das Echosignal ECB oder umgekehrt, je nach Flußrichtung zu ermöglichen, um die Differenzverzögerung zu messen, die $t_{AB}$-$t_{BA}$ bzw. $t_{BA}$-$t_{AB}$ entspricht.

### Claims

1. Method for ultrasonic measurement of the velocity of a current of liquid in a circular pipe according to the formula:

$$\bar{V} = \frac{L}{2\cos\theta} \cdot \frac{t_{AB}-t_{BA}}{t_{AB}.t_{BA}}$$

where L is the length of the path AB and $\theta$ the angle of the path AB with respect to the axis of the pipe, said method employing:

- measurement $t_{AB}$ of the time taken for propagation of a wave from a transducer A to a transducer B by counting the pulses delivered by a clock, the path AB being the distance between A and B;
- measurement $t_{BA}$ of the time taken for propagation of a wave in the opposite direction by counting said pulses;
- measurement of the differential time lag $t_{AB}$-$t_{BA}$ or $t_{BA}$-$t_{AB}$ according to the direction of flow, by counting said pulses;
- a single counting device, equipped with start and stop gates, for measuring the three aforementioned times;
- a compensation phase for parasitic time lags falsifying the differential time lag measurement, comprising, on the one hand, measurement of the parasitic time lag $\Delta 1$ during which the start and stop gates of the counter are controlled respectively by echo signal ECA received by transducer A and echo signal ECB received by transducer B, said signals ECA and ECB being simultaneously transmitted by the two transducers, and, on the other hand, measurement of the parasitic time lag $\Delta 2$ during which the start and stop gates of the counter are controlled respectively by echo signals ECB and ECA, and enabling correction of the differential time lag, the value of which is considered as:

$(t_{AB}$-$t_{BA}) \pm \Delta 1$ if $\Delta 1 \neq 0$ and $\Delta 2 = 0$

or $(t_{AB}$-$t_{BA}) \pm \Delta 2$ if $\Delta 1 = 0$ and $\Delta 2 \neq 0$

or $(t_{AB}$-$t_{Ba})$ if $\Delta 1 = \Delta 2 = 0$,

- a control phase, during which the difference between the two measured values $t_{AB}$ and $t_{BA}$ is compared to the measured and corrected value of the differential time lag.

2. Measuring method as claimed in Claim 1, additionally consisting in determining a value approximating to the discharge velocity according to the method of Claim 1, in determining a first value for the Reynolds number based on this velocity value, in determining the velocity profile based on the Reynolds number thus determined, in integrating this value for the velocity profile over the pipe section to give a second value for the discharge velocity, and in determining a value more closely approximating to the Reynolds number and in thus repeating the determination of the discharge velocity to give a value for the latter equal to the previous value.

3. Measuring method as claimed in Claim 1, wherein:

- a first and a second pair of transducers are disposed in a plane yoz which runs through the axis oz of the conduit symmetrically with respect to the axis oy perpendicular to oz, the third pair is parallel to the plane yoz and the fourth pair is located in a plane parallel to the plane xoz; ox, oy, oz forming a system of axes with rectangular coordinates;

- the discharge velocity at the centre of the pipe is deduced from the measurements of average velocity along the two paths defined above by the first and second pairs of transducers;

- the velocity profile chosen to represent discharge velocity component $V_z$ has the form:

$$V_z(x,y) = k + ax + by - \frac{k}{R^2}(x^2 + y^2) - \frac{a\,xy^2}{R^2}$$

$$- \frac{b\,x^2y}{R^2} - \frac{a\,x^3}{R^2} - \frac{b\,y^3}{R^2}$$

a, b and k being numerical coefficients and R the radius of the pipe.

4. Apparatus for ultrasonic measurement of the velocity of a current of liquid in a circular pipe according to the formula

$$\bar{V} = \frac{L}{2.\cos\theta} \cdot \frac{t_{AB} - t_{BA}}{t_{BA}.t_{AB}}$$

where L is the length of the path AB and $\theta$ the angle of the path AB with respect to the axis of the pipe, for carrying out the method claimed in any one of Claims 1 to 3, said apparatus comprising:

- not less than two ultrasonic transducers A, B, separated by the path AB;

- means, constituted by a single counting device (43), for performing the successive measurements, by counting the pulses delivered by a clock of frequency higher than 140 MHz, of the propagation time $t_{AB}$ of a wave transmitted by transducer A to transducer B, of the propagation time $t_{BA}$ of a wave in the opposite direction and of the time lag or differential time $t_{AB}-t_{BA}$ or $t_{BA}-t_{AB}$, according to the direction of flow;

- commutation means (61, 62) controlling stop (42) and start (41) gates which enable

- the counter (43) to be started by the wave transmission signal from transducer A to transducer B and the counter (43) to be stopped by echo signal ECB received by B, to measure $t_{AB}$;

- the counter (43) to be started by the wave transmission signal from transducer B to A and the counter (43) to be stopped by echo signal ECA received by A, to measure $t_{BA}$;

- after transmission of a wave simultaneously by the two transducers A and B, the counter (43) to be started by echo signal ECA and stopped by echo signal ECB, or vice versa according to the direction of flow, to measure the corresponding differential time lag $t_{AB}-t_{BA}$, $t_{BA}-t_{AB}$.

FIG. 1

réglage gain émission

choix sonde A
choix sonde B
mesure - controle
inversion ECA-ECB
déclenchement

émission

RAZ

30

50

42

to

EM

ECA

M

10

A

8

20

21

ECB

22

41

61

42

62

45

43

44

débit

mesure
calibrage
données

5

6

FIG. 2

FIG. 3

FIG. 4

FIG. 5

5